# EUROPÄISCHE PATENTSCHRIFT

(11) **EP 2 783 125 B1**
(45) Veröffentlichungstag und Bekanntmachung des Hinweises auf die Patenterteilung: **13.12.2017**
(21) Anmeldenummer: 12775018.0
(22) Anmeldetag: 18.10.2012
(51) Int. Cl.: F16D 65/12

(54) **BREMSSCHEIBE**
BRAKE DISK
DISQUE DE FREIN

(30) Priorität: 25.11.2011 DE 102011087136
(43) Veröffentlichungstag der Anmeldung: 01.10.2014
(73) Patentinhaber: Robert Bosch GmbH, 70442 Stuttgart (DE)
(72) Erfinder: KUCKERT, Hagen, 74321 Bietigheim-Bissingen (DE); HUSCHENHOEFER, Wolfgang, 35614 Asslar (DE); KETTELER, Georg, 35232 Dautphetal (DE); RAAB, Roland, 69198 Wiesloch (DE); DUPUIS, Vincent, 70567 Stuttgart (DE); MAYER, Andreas, 76133 Karlsruhe (DE); BUGADA, Olivier, 73760 Ostfildern-Kemnat (DE)
(86) Internationale Anmeldenummer: PCT/EP2012/070638
(87) Internationale Veröffentlichungsnummer: WO 2013/075891

(56) Entgegenhaltungen:
- WO-A1-2009/015308
- JP-A- 2007 162 779
- US-A- 5 629 101
- US-A1- 2004 038 032

## Beschreibung

Die Erfindung betrifft eine Bremsscheibe für eine Scheibenbremse eines Kraftfahrzeugs mit den Merkmalen des Oberbegriffs des Anspruchs 1.

### Stand der Technik

Bremsscheiben für Scheibenbremsen von Kraftfahrzeugen sind bekannt, sie bestehen überwiegend aus Grauguss oder aus Stahl-Legierungen. Zur Erhöhung einer Verschleißfestigkeit und/oder zur Vermeidung oder Minderung von Korrosion kann eine Bremsscheibe eine Oberflächenbeschichtung aufweisen, die die Verschleißfestigkeit und/oder Korrosionsbeständigkeit erhöht. Oft sind nur Reibflächen der Bremsscheibe und ggf. angrenzende Oberflächen beschichtet, letzteres weil es zusätzlicher Aufwand wäre, die Oberflächenbeschichtung genau auf die Reibflächen zu begrenzen. Dadurch besteht die Gefahr, dass Korrosion die Oberflächenbeschichtung unterwandert, so dass die Bremsscheibe unter der Oberflächenbeschichtung korrodiert und die Oberflächenbeschichtung sich löst.

Die Reibflächen einer Bremsscheibe sind die kreisringscheibenförmigen Oberflächenbereiche, gegen die beim Bremsen Reibbremsbeläge gedrückt werden, um die Bremsscheibe durch Reibkraft zu bremsen.

Die internationale Patentanmeldung WO 2009/015 308 A1 offenbart eine Bremsscheibe aus Grauguss, auf deren Reibflächen eine Beschichtung aufgebracht ist, die eine Verschleißfestigkeit erhöht. Ausserhalb der Reibflächen ist eine Oberflächenbeschichtung auf die Bremsscheibe aufgebracht, die eine Korrosionsbeständigkeit erhöht. Es besteht die Möglichkeit, dass Feuchtigkeit an einer Grenze zwischen den beiden Beschichtungen eindringt und die die Verschleißfestigkeit erhöhende Beschichtung unterwandert.

### Offenbarung der Erfindung

Die erfindungsgemäße Bremsscheibe mit den Merkmalen des Oberbegriffs des Anspruchs 1 weist eine Oberflächenbeschichtung ihrer Reibflächen auf, die eine Verschleißfestigkeit und/oder Korrosionsbeständigkeit erhöht. Die Oberflächenbeschichtung muss nicht an Rändern der Reibflächen enden, sondern kann auch angrenzende Oberflächenbereiche bedecken. Um ein Unterkriechen von Korrosion unter die Oberflächenbeschichtung der Reibflächen zu verhindern, sieht die Erfindung eine korrosionsbeständige Oberflächenbeschichtung von Oberflächen der Bremsscheibe vor, die an die Reibflächen bzw. an die Oberflächenbeschichtung der Reibflächen, die nicht an Rändern der Reibflächen enden muss, sondern angrenzende Oberflächen bedecken kann, vor. Die korrosionsbeständige Oberflächenbeschichtung kann sich auf Bereiche der an die Reibflächen angrenzenden Oberflächen beschränken, sie kann auch großflächig vorhanden oder die Bremsscheibe insgesamt bedecken. Erfindungsgemäß überlappen die Oberflächenbeschichtungen einander, um ein Eindringen von Korrosion zuverlässig zu vermeiden. Die korrosionsbeständige Oberflächenbeschichtung der an die Reibflächen angrenzenden Oberflächen besteht aus einem anderen Material als die Oberflächenbeschichtung der Reibflächen, sie kann thermisch oder kalt aufgebracht sein, es kann sich beispielsweise um eine chemische- oder galvanische Beschichtung oder einen Lackauftrag handeln. Außer außen und innen an die Reibflächen angrenzende Oberflächen sind auch Lochungen der Bremsscheibe jedenfalls im Bereich der Lochmündungen in die Reibflächen, Nutungen, Schlitzungen usw. in den Reibflächen der Bremsscheibe mit einer korrosionsbeständigen Oberflächenbeschichtung, versehen sofern solche Lochungen, Nutungen oder Schlitzungen nicht vollständig von der Oberflächenbeschichtung der Reibflächen bedeckt sind, was insbesondere bei Nutungen der Fall sein kann. Die erfindungsgemäße, korrosionsbeständige Oberflächenbeschichtung von Oberflächen einer Bremsscheibe, die an eine eine Verschleißfestigkeit und/oder Korrosionsbeständigkeit erhöhende Oberflächenbeschichtung der Reibflächen der Bremsscheibe angrenzt, vermeidet eine Unterwanderung der Oberflächenbeschichtung der Reibflächen durch Korrosion, die die Reibflächen schädigt und ihre Oberflächenbeschichtung ablösen kann.

Die Unteransprüche haben vorteilhafte Ausgestaltungen und Weiterbildungen der im Anspruch 1 angegebenen Erfindung zum Gegenstand.

### Kurze Beschreibung der Zeichnung

Die Erfindung wird nachfolgend anhand eines in der Zeichnung dargestellten Ausführungsbeispiels näher erläutert. Es zeigen:
- Figur 1: eine perspektivische Darstellung einer erfindungsgemäßen Bremsscheibe;
- Figur 2: eine vergrößerte Schnittdarstellung gemäß Linie II-II in Figur 1; und
- Figur 3: eine erfindungsgemäße Abwandlung in einer Figur 2 entsprechenden Darstellung.

### Ausführungsform der Erfindung

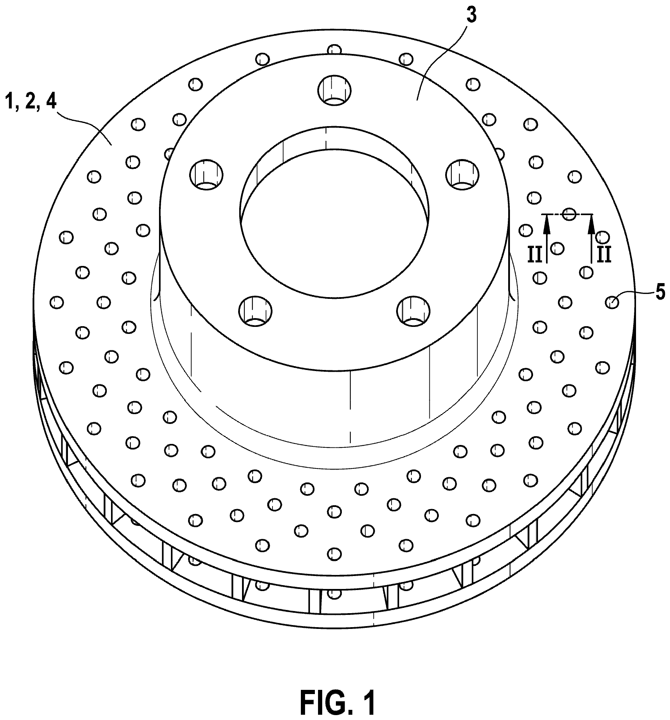

Die in Figur 1 dargestellte Bremsscheibe 1 weist einen kreisringscheibenförmigen Bremsring 2 und eine mit dem Bremsring 2 einstückige und koaxiale, napfförmige Nabe 3 auf. Der Reibring 2 bildet die eigentliche Bremsscheibe. Die Bremsscheibe 1 ist innenbelüftet, ihr Bremsring 2 ist doppelwandig. Äußere Stirnflächen des Bremsrings 2 bilden kreisringscheibenförmige Reibflächen 4 der Bremsscheibe 1. Die Reibflächen 4 sind die Oberflächen der Bremsscheibe 1, gegen die beim Bremsen nicht dargestellte Reibbremsbeläge gedrückt werden, um die Bremsscheibe 1 durch Reibung zu bremsen.

Die Bremsscheibe 1 ist gelocht, d. h. sie weist Löcher 5 auf, die den Bremsring 2 durchsetzen.

Die Bremsscheibe 1 besteht aus Grauguss oder einer Stahllegierung.

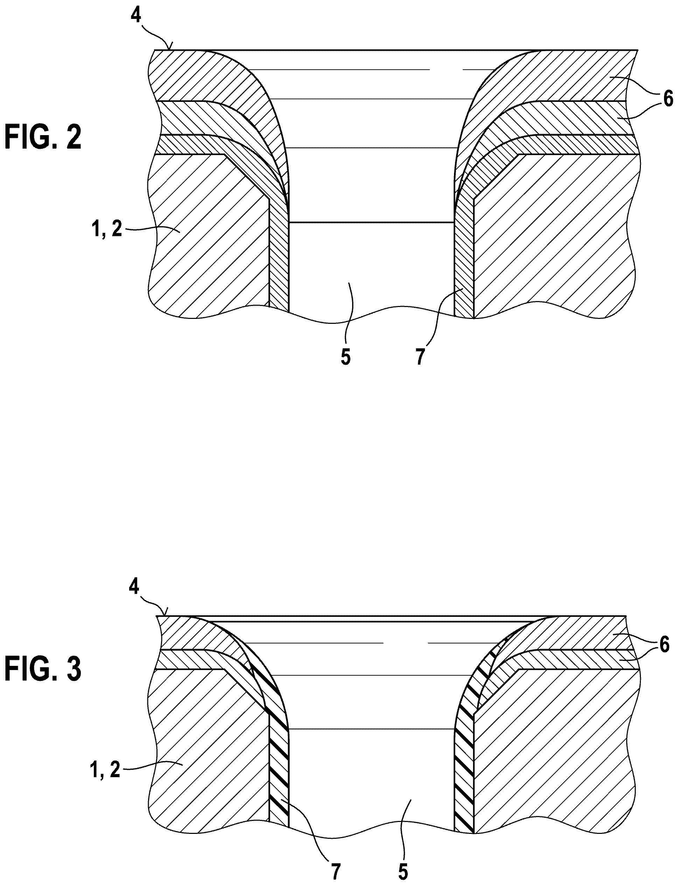

Die Reibflächen 4 der Bremsscheibe 1 sind mit einer Oberflächenbeschichtung 6 versehen, die eine Verschleißfestigkeit und eine Korrosionsbeständigkeit erhöht. Die Oberflächenbeschichtung 6 ist eine thermische Pulverbeschichtung, die beispielsweise durch Flamm- oder Lichtbogenspritzen aufgetragen ist. Die Oberflächenbeschichtung 6 der Reibflächen 4 weist Carbide, insbesondere Metallcarbide, beispielsweise Chrom- oder Wolframcarbide auf, die in eine Matrix, insbesondere eine metallische Matrix, aus beispielsweise Nickel- oder Kobalt eingelagert sind. Die die Verschleißfestigkeit und Korrosionsbeständigkeit erhöhende Oberflächenbeschichtung 6 der Reibflächen 4 kann ein- oder mehrschichtig sein, im Ausführungsbeispiel ist sie wie in Figur 2 zu sehen zweischichtig.

Die Oberflächenbeschichtung 6 der Reibflächen 4 endet nicht genau an Rändern der Reibflächen 4, sondern erstreckt sich auch etwas auf angrenzende Oberflächen der Bremsscheibe 1. Als Ränder weisen die Reibflächen 4 ihre äußeren- und inneren Umfangsränder sowie Mündungen der Löcher 5 auf. Weisen die Reibflächen 4 beispielsweise Nuten oder Schlitze auf (nicht dargestellt), weisen die Reibflächen 4 auch dort Ränder auf. Wie in Figur 2 anhand eines Lochs 5 der Bremsscheibe 1 dargestellt, erstreckt sich die Oberflächenbeschichtung 6 über die Reibfläche 4 hinweg ein Stück weit in eine Mündung des Lochs 5 hinein. Das gilt entsprechend auch für die anderen Ränder der Reibflächen 4.

Außer der Oberflächenbeschichtung 6 der Reibflächen 4 weist die Bremsscheibe 1 eine weitere, korrosionsbeständige Oberflächenbeschichtung 7 auf Oberflächen auf, die an die Oberflächenbeschichtung 6 der Reibflächen 4 angrenzen. In Figur 2 bedeckt diese weitere Oberflächenbeschichtung 7 Wandungen der Löcher 5 der Bremsscheibe 1. Die weitere Beschichtung 7 ist zumindest auf den an die Oberflächenbeschichtung 6 der Reibflächen 4 angrenzenden Oberflächen der Bremsscheibe 1 vorgesehen, die weitere Oberflächenbeschichtung 7 kann auch größere Teile der angrenzenden Oberflächen oder die Oberflächen der Bremsscheibe 1 insgesamt bedecken. Die weitere Oberflächenbeschichtung 7, die nicht nur an den Löchern 5, sondern an allen Rändern der Oberflächenbeschichtung 6 der Reibflächen 4 vorhanden ist, verhindert ein Eindringen von Korrosion unter die Oberflächenbeschichtung 6 der Reibflächen 4 an deren Rändern. Um ein Eindringen von Korrosion zu verhindern, überlappen die Oberflächenbeschichtungen 6, 7 einander. In Figur 2 bedeckt die weitere, korrosionsbeständige Oberflächenbeschichtung 7 auch die Reibflächen 4, sie ist als Unter- oder Zwischenschicht, beispielsweise als Tragschicht unter der Oberflächenbeschichtung 6 der Reibflächen 4 auf der Bremsscheibe 1 aufgebracht. Die weitere Oberflächenbeschichtung 7 benötigt keine hohe Verschleißfestigkeit, allerdings eine ausreichende mechanische Festigkeit, wenn sie als Tragschicht unter der Oberflächenbeschichtung 6 aufgebracht ist. In Figur 2 ist deswegen eine korrosionsbeständige Metallschicht, beispielsweise aus Nickel oder Kupfer, als weitere Oberflächenbeschichtung 7 thermisch aufgetragen oder chemisch- oder galvanisch auf die Oberflächen der Bremsscheibe 1 abgeschieden. Die weitere, korrosionsbeständige Oberflächenbeschichtung 7 befindet sich wie bereits gesagt nicht nur in den Löchern 5 der Bremsscheibe 1, sondern auch am Außen- und am Innenumfang ihres Bremsrings 2 bzw. in nicht dargestellten Nuten oder Schlitzen der Reibflächen 4.

In Figur 3 ist die die Verschleißfestigkeit und Korrosionsbeständigkeit erhöhende Oberflächenbeschichtung 6 der Reibflächen 4 der Bremsscheibe 1 ebenfalls zweischichtig. Im Unterschied zur Figur 2 bedeckt in Figur 3 die weitere, korrosionsbeständige Oberflächenbeschichtung 7 nicht die Reibflächen 4, sondern sie überlappt die Oberflächenbeschichtung 6 der Reibflächen 4 an deren Rändern, beispielsweise an Mündungen der Löcher 5 der Bremsscheibe 1, und endet dort. Die an die Oberflächenbeschichtung 6 der Reibflächen 4 anschließende weitere Oberflächenbeschichtung 7 befindet sich auch an den anderen Rändern der Oberflächenbeschichtung 6 der Reibflächen 4, beispielsweise an den Außen- und Innenrändern (nicht dargestellt). Weil die weitere Oberflächenbeschichtung 7 in Figur 3 keinen nennenswerten mechanischen Beanspruchungen ausgesetzt ist, benötigt sie keine hohe mechanische Festigkeit, sie kann deswegen aus beispielsweise einem Lack oder einem Kunststoff bestehen. Sie benötigt allerdings eine ausreichende thermische Beständigkeit bis zu Temperaturen, die die Bremsscheibe 1 im Betrieb erreichen kann.

## Patentansprüche

1. Bremsscheibe für eine Scheibenbremse eines Kraftfahrzeugs, mit einer eine Verschleißfestigkeit und/oder Korrosionsbeständigkeit erhöhenden Oberflächenbeschichtung (6) ihrer Reibflächen (4) und mit einer weiteren korrosionsbeständigen Oberflächenbeschichtung (7) ihrer an die Reibflächen (4) angrenzenden Oberflächen, **dadurch gekennzeichnet, dass** die Oberflächenbeschichtungen (6, 7) einander überlappen.

2. Bremsscheibe nach Anspruch 1, **dadurch gekennzeichnet, dass** die weitere, korrosionsbeständige Oberflächenbeschichtung (7) der an die Reibflächen (4) angrenzenden Oberflächen der Bremsscheibe (1) sich unter die die Verschleißfestigkeit und/oder Korrosionsbeständigkeit erhöhende Oberflächenbeschichtung (6) der Reibflächen (4) fortsetzt.

3. Bremsscheibe nach Anspruch 1, **dadurch gekennzeichnet, dass** die Oberflächenbeschichtung (6) der Reibflächen (4) mehrschichtig ist.

## Claims

1. Brake disc for a disc brake of a motor vehicle, having a surface coating (6) of its friction faces (4) which increases a wear resistance and/or corrosion resistance, and having a further corrosion-resistant surface coating (7) of its surfaces which adjoin the friction faces (4), **characterized in that** the surface coatings (6, 7) overlap one another.

2. Brake disc according to Claim 1, **characterized in that** the further, corrosion-resistant surface coating (7) of those surfaces of the brake disc (1) which adjoin the friction faces (4) continues below the surface coating (6) of the friction faces (4) which increases the wear resistance and/or corrosion resistance.

3. Brake disc according to Claim 1, **characterized in that** the surface coating (6) of the friction faces (4) is in multiple layers.

## Revendications

1. Disque de frein pour un frein à disques d'un véhicule automobile, comprenant un revêtement de surface (6) de ses surfaces de friction (4) augmentant une résistance à l'usure et/ou une résistance à la corrosion et un revêtement de surface supplémentaire résistant à la corrosion (7) de ses surfaces adjacentes aux surfaces de friction (4), **caractérisé en ce que** les revêtements de surface (6, 7) se chevauchent mutuellement.

2. Disque de frein selon la revendication 1, **caractérisé en ce que** le revêtement de surface supplémentaire résistant à la corrosion (7) des surfaces du disque de frein (1) adjacentes aux surfaces de friction (4) se poursuit en dessous du revêtement de surface (6) des surfaces de friction (4) augmentant la résistance à l'usure et/ou la résistance à la corrosion.

3. Disque de frein selon la revendication 1, **caractérisé en ce que** le revêtement de surface (6) des surfaces de friction (4) est multicouche.
